# EUROPÄISCHE PATENTSCHRIFT

(11) **EP 1 134 129 B1**
(45) Veröffentlichungstag und Bekanntmachung des Hinweises auf die Patenterteilung: **18.01.2006**
(21) Anmeldenummer: 01102559.0
(22) Anmeldetag: 06.02.2001
(51) Int. Cl.: B60R 21/13

(54) **Haltevorrichtung für den Überrollkörper eines Überrollschutzsystems**
Device for holding the roll bar of a roll bar protection system
Dispositif retenant l'arceau d'un système de protection par arceau

(30) Priorität: 15.03.2000 DE 10012573
(43) Veröffentlichungstag der Anmeldung: 19.09.2001
(73) Patentinhaber: ISE Innomotive Systems Europe GmbH, 51702 Bergneustadt (DE)
(72) Erfinder: Menne, Hans-Gerd, 51702 Bergneustadt (DE); Latussek, Holger, 51702 Bergneustadt (DE)
(74) Vertreter: Fuchs Mehler Weiss & Fritzsche

(56) Entgegenhaltungen:
- EP-A- 0 760 314
- DE-A- 4 314 538
- DE-A- 4 342 400
- DE-C- 19 949 944
- US-A- 5 890 738

## Beschreibung

Die Erfindung bezieht sich auf eine Haltevorrichtung für den Überrollkörper eines Überrollschutzsystems für Kraftfahrzeuge, die ein am Überrollkörper befestigtes Halteglied mit einem Haltebolzen aufweist, der in lösbarer mechanischer Wirkverbindung mit einem Auslöseglied eines sensorgesteuerten Auslösesystems steht.

Überrollschutzsysteme, wie sie insbesondere bei Cabriolets oder Sportwagen eingesetzt werden, weisen typischerweise einen geführten Überrollkörper, insbesondere Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung in eine obere, schützende und dort verriegelte Stellung bringbar ist.

Die Haltevorrichtung besitzt zu diesem Zweck typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten oder durch ein pyrotechnisches Auslöseglied gebildet ist.

Nach einer Auslösung soll beim Zurückbringen des Überrollkörpers in die Ruhelage, sei es manuell oder mittels eines Komfortantriebes, das Halteglied wieder selbsttätig in die haltende Ausgangsstellung, die Haltestellung, bringbar sein.

Haltevorrichtungen der vorgenannten Art sind in zahlreichen Konstruktionsvarianten bekannt geworden. So zeigt die DE 43 14 538 C 1 (= EP 0 729 867 A1) eine sogenannte, mit dem Überrollbügel mechanisch beweglich verbundene Haltewippe als Halteglied, die einen Haltebolzen besitzt, der in Wirkverbindung mit einem hakenförmigen Auslöseglied steht, das durch Aktivieren des Auslösemagneten in eine den Haltebolzen freigebende Stellung bewegbar ist. Trotz der drehbeweglich angelenkten Haltewippe und einer Einlaufschräge am Auslösesystem kann das bekannte System durch seine Starrheit nicht alle Fertigungstoleranzen und Fluchtungsfehler, zumindest nicht ohne das Auftreten von Querkräften, ausgleichen.

Eine vergleichbare Konstruktion der Haltewippe zeigt die gattungsbildende DE 43 42 400 A1.

Der gleiche Nachteil gilt für die Haltevorrichtung nach der EP 0 760 314 A 1. Diese weist eine mit dem Überrollbügel starr verbundene biegefeste Haltestange auf, an der Vorsprünge zum Eingriff von Halteklauen vorgesehen sind, die schwenkbar am Fahrzeugaufbau gelagert sind. Die Halteklauen sind mittels des Crashmagneten aus der Verriegelungsstellung von den Vorsprüngen weg in eine Freigabestellung schwenkbar. Dabei sind die Halteklauen unter der Wirkung einer Feder in die Freigabestellung vorgespannt, wobei ein durch den Auslösemagneten bestätigbarer Stift die Halteklauen gegen das Verschwenken in die Freigabestellung blockiert.

Ferner ist durch die DE 197 50 457 A 1 eine Haltevorrichtung mit einem glockenförmigen Halteglied, in das Kugeln einrasten, bekannt geworden. Dieses System erfordert eine zeitaufwendige Justierung, um zu gewährleisten, daß das Halteglied nach einer Auslösung wieder selbsttätig in die Haltestellung bringbar ist. Zum anderen hat sich bei der Simulation von extremen Einbausituationen, d.h. bei einem sehr starken diagonalen Verspannen des Überrollbügels, gezeigt, daß die Kugeln trotz sorgfältiger Einstellung des Haltegliedes, nicht immer sämtlich selbsttätig beim Zurückdrücken des Überrollbügels in der Haltestelllung einrasten. Ähnliches gilt für die Haltevorrichtung aus der DE 37 32 562 C1.

Die EP 0 761 505 A1 zeigt eine Haltevonichtung für einen Überrollkörper mit einer starren Haltestange als Halteglied, die eine Kegelspitze aufweist und die mit einer umlaufenden Nut zum Eingriff von Sperrkugeln versehen ist, die in Querbohrungen eines mit dem Auslösesystem verbundenen Halteelementes radial beweglich angeordnet sind. Auch diese Haltevorrichtung kann nicht alle Fertigungs- und Montagetoleranzen sicher und ohne Querbelastungen ausgleichen.

In der älteren Patentanmeldung 199 49 944.6 wird eine Haltevorrichtung für den Überrollkörper eines Überrollschutzsystems beschrieben, bei der der Haltebolzen des Haltegliedes für den Wirkeingriff mit dem Auslösesystem in einer Haltegabel entweder starr oder alternativ über eine Wippe gelagert ist, und bei der der Haltegabel eine Druckfeder vorgespannt zugeordnet ist, derart, daß darüber eine elastische Wirkverbindung des Haltegliedes mit dem Auslöseglied hergestellt ist. Bei einer starren Lagerung des Haltebolzens in der Haltegabel ist dies durch eine Taumelbewegung der Haltegabel möglich, wogegen im Fall der Wippe deren Aufhängung in der Haltegabel entsprechende Bewegungs-Freiheitsgrade aufweist.

Der Erfindung liegt die Aufgabe zugrunde, die eingangs bezeichnete Haltevorrichtung so auszubilden, daß Fluchtungsfehler und Fertigungstoleranzen beim Wiedereinfahren des Überrollkörpers und damit des Haltegliedes in das Auslöseglied auf einfache Weise wirksam ohne Verspannungen ausgeglichen werden können.

Die Lösung dieser Aufgabe gelingt erfindungsgemäß, ausgehend von einer Haltevorrichtung für den Überrollkörper eines Überrollschutzsystems für Kraftfahrzeuge, die ein am Überrollkörper befestigtes Halteglied mit einem Haltebolzen aufweist, der in lösbarer mechanischer Wirkverbindung mit einem Auslöseglied eines sensorgesteuerten Auslösesystems steht, dadurch, daß das Halteglied zwischen dem Haltebolzen und seiner Befestigung am Überrollkörper zumindest in einem vorgegebenen Abschnitt durch Formgebung und/oder mittels eines elastischen Materials zum Ausgleich von Fertigungstoleranzen und Fluchtungsfehlern elastisch nachgebend ausgebildet ist.

Durch die elastisch nachgebende Verbindung des Haltebolzens mit dem Überrollkörper können auf einfache Weise montagebedingte Fluchtfehler und Fertigungstoleranzen beim Wiedereinfahren eines ausgelösten Überrollkörpers, und damit des Haltegliedes, in das Auslöseglied wirksam ohne das Auftreten von mechanischen Verspannungen im Halteglied ausgeglichen werden.

Für die Ausbildung des federnden Haltegliedes sind mehrere konstruktive Möglichkeiten denkbar. Eine einfache konstruktive Gestaltung besteht gemäß einer Weiterbildung der Erfindung darin, daß das Halteglied als Haltegabel ausgebildet ist, die aus einem elastisch nachgebenden Material aufgebaut ist, und starr mit dem Überrollkörper verbunden ist, und in deren Gabelschenkeln der Haltebolzen gehaltert ist.

Dabei besteht das elastisch nachgebende Material aus einem entsprechenden Metall, vorzugsweise Federstahl, Bronze oder Messing oder alternativ aus einem entsprechend elastisch nachgebenden Kunststoff.

Die Ausbildung der Haltegabel kann dabei gemäß einer Ausgestaltung der Erfindung so getroffen sein, daß die Haltegabel ein Strangpressteil ist, oder ein Spritzgußteil mit Bohrungen in den Gabelschenkeln zur Lagerung des Haltebolzens.

Alternativ dazu kann die Haltegabel auch aus einem Blechteil geformt sein, mit einer ersten Ausgestaltung der Erfindung derart, daß die Haltegabel aus einem einschaligen Blechteil geformt ist, das in den Gabelschenkel wechselseitig jeweils eine halbkreisförmige Ausprägung als Lagerstelle für den Haltebolzen aufweist, oder mit einer zweiten Ausgestaltung der Erfindung derart, daß die Haltegabel zweischalig aus einem Blechteil geformt ist, und in beiden Gabelschenkeln jeweils zwei gegenüberliegende halbkreisförmige Ausprägungen als Lagerstellen für den Haltebolzen ausgeformt sind.

Alternativ zur Ausbildung des Haltegliedes als Haltegabel ist die Haltevorrichtung gemäß einer anderen Weiterbildung der Erfindung so ausgebildet, daß das Halteglied einen glockenförmigen Aufnahmekörper aufweist, der an zwei gegenüberliegenden Bereichen Bohrungen mit daran innen angeformten hohlen Lagerzapfen für den Haltebolzen besitzt, und der kopfseitig einen Fortsatz zur starren Befestigung am Überrollkörper mit mindestens einem dünnen Steg, der eine elastische Verbiegung des Aufnahmekörpers ermöglicht, aufweist. Diese glockenförmige Ummantelung des Haltebolzens verhindert, daß Schmutz an die Schnittstelle zum Auslösesystem gelangen kann, der eine Auslösung verhindern könnte.

Eine besonders gute Flexibilität des glockenförmigen Aufnahmekörpers ist gegeben, wenn der Fortsatz zwei um 90° zueinander versetzte dünne Stegbereiche aufweist.

Die Befestigung des glockenförmigen Aufnahmekörpers mit seinem Fortsatz am Überrollkörper kann auf verschiedene Weise erfolgen. Eine erste konstruktive Ausgestaltung besteht darin, daß an der Oberseite des Fortsatzes zwei Befestigungslaschen zur Befestigung mit einer Schelle angeformt sind, und die Schelle mit dem Überrollkörper verbindbar ist.

Alternativ dazu besteht eine zweite konstruktive Gestaltung darin, daß an der Oberseite des Fortsatzes ein Verbindungselement für eine formschlüssige Verbindung mit dem Überrollkörper angeformt ist.

Um ein sicheres Wiedereinfahren des Haltebolzens in das Auslöseglied zu gewährleisten, ist die Anordnung so getroffen, daß am offenen Rand des glockenförmigen Aufnahmekörpers Führungsnasen angeformt sind.

Vorzugsweise besteht der glockenförmige Aufnahmekörper mit seinen Lagerzapfen und dem Fortsatz aus Kunststoff und ist bevorzugt ein Spritzgießteil, was eine besonders wirtschaftliche Herstellung des Haltegliedes ermöglicht.

Jedes Auslösesystem, das ein hakenförmiges Auslöseglied für den Wirkeingriff mit dem Haltebolzen aufweist, ist prinzipiell anwendbar. Besondere Vorteile hinsichtlich der Auslösesicherheit werden erzielt, wenn das Auslösesystem einen Auslösemagneten in Verbindung mit einem Doppelhebelsystem als im Wirkeingriff mit dem Haltebolzen stehendes Auslöseglied aufweist.

Anhand von in den Zeichnungen dargestellten Ausführungsformen der Erfindung wird diese näher beschrieben.

Es zeigen:

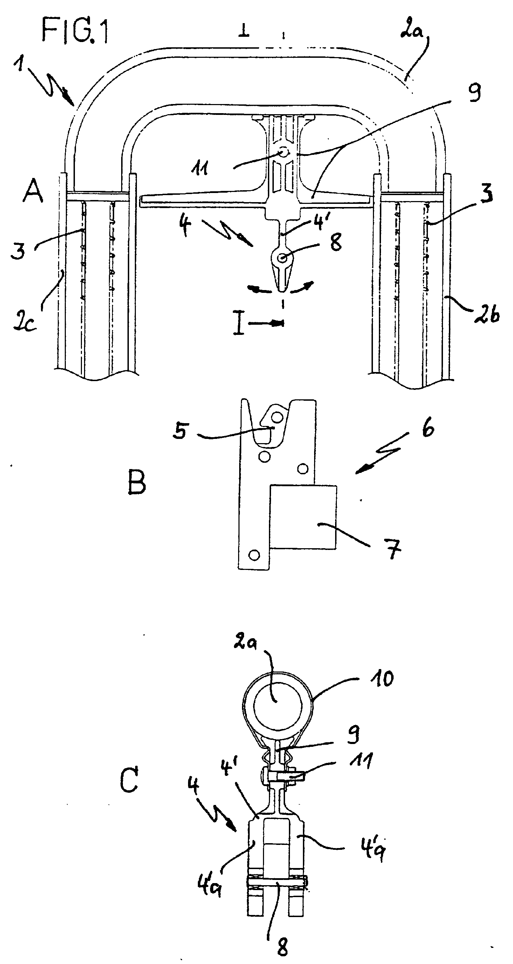

- Fig. 1: in drei Figurenteilen in einer schematischen Darstellung eine erste Ausführungsform der Erfindung mit einer flexiblen massiven Haltegabel und darin aufgenommenen Haltebolzen als Halteglied für den Überrollbügel, mit einer Längsschnitt-Darstellung des Überrollbügelsystems im Figurenteil A, dem Auslösesystem im Figurenteil B und einer Querschnitts- Darstellung des Haltegliedes im Figurenteil C bezogen auf die Schnittlinie I - I im Figurenteil A,

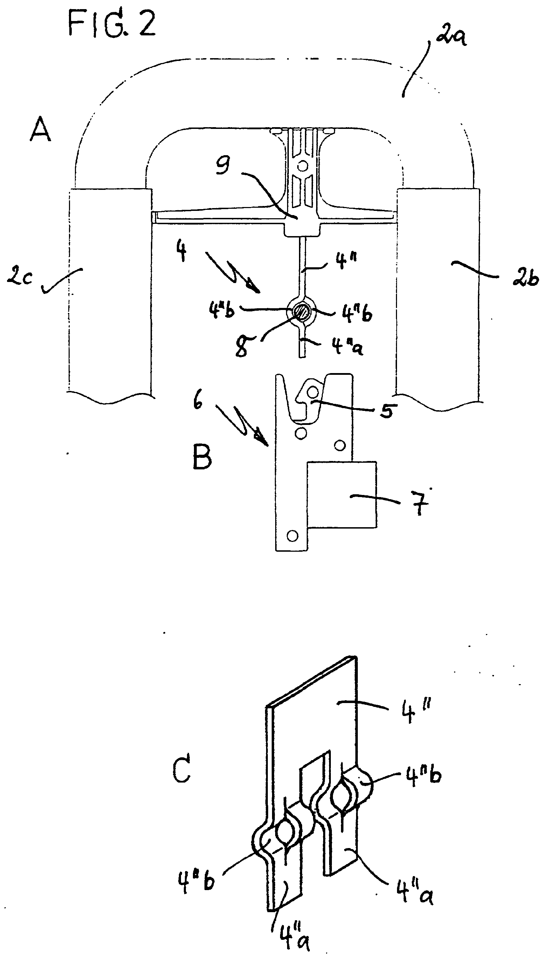

- Fig. 2: in drei Figurenteilen A, B und C entsprechend Fig. 1 eine zweite Ausführungsform der Erfindung mit einer einschalig aus einem elastisch nachgebenden Blechteil gebildeten Haltegabel,

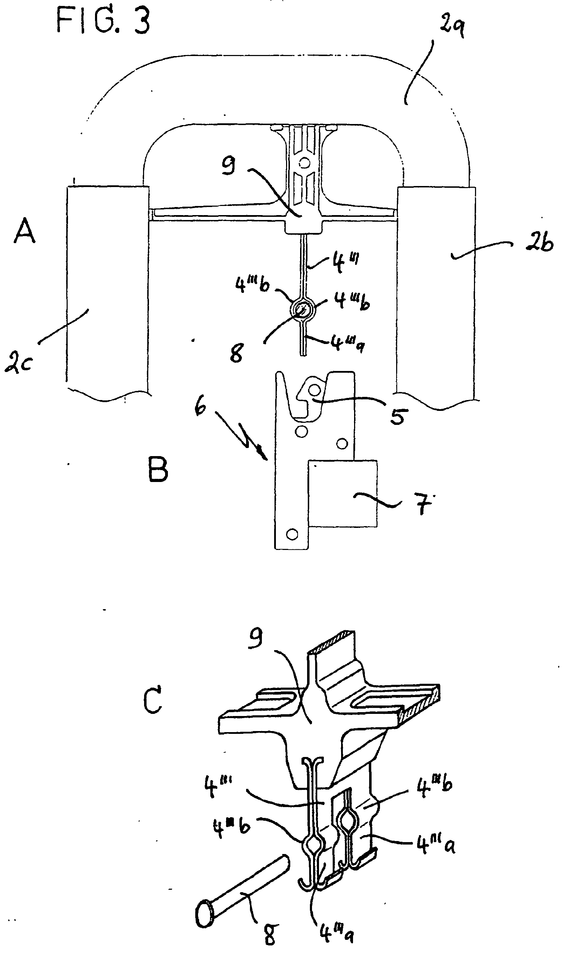

- Fig. 3: in drei Figurenteilen A, B und C entsprechend Fig. 1 eine dritte Ausführungsform der Erfindung mit einer zweischalig aus einem elastisch nachgebenden Blechteil gebildeten Haltegabel,

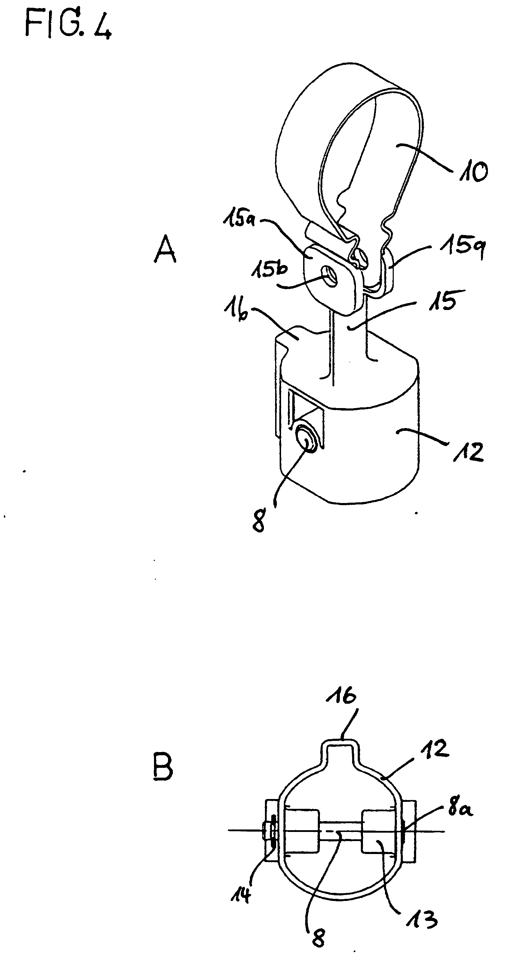

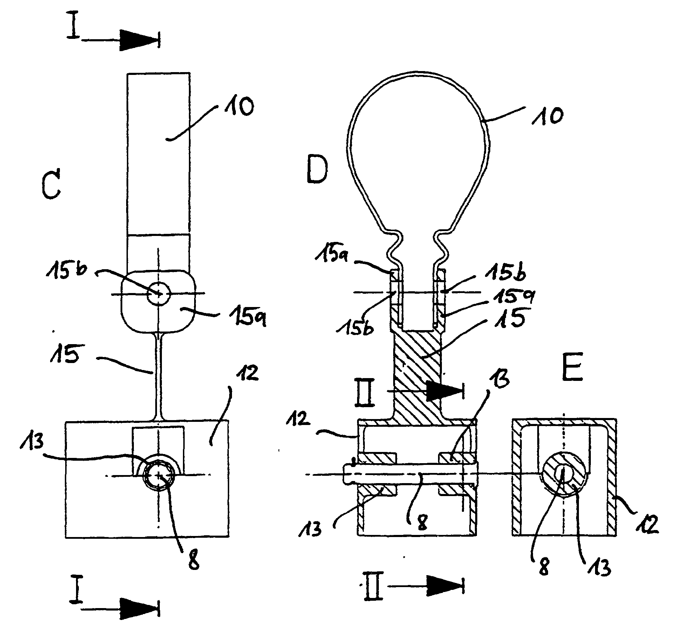

- Fig. 4: in fünf Figurenteilen A - E eine vierte Ausführungsform der Erfindung mit einem glockenförmigen Aufnahmekörper für den Haltebolzen und einem dünnen, flexiblen Stegabschnitt an dem Befestigungsfortsatz des Aufnahmekörpers, mit einer perspektivischen Darstellung im Figurenteil A, eine Draufsicht auf die Unterseite des Aufnahmekörpers mit Darstellung der Lagerzapfen des Haltebolzens im Innern des Aufnahmekörpers nach Figurenteil B, einer Seitenansicht der Haltegabel entlang der Achse des Haltebolzens im Figurenteil C, einer Schnittansicht durch den glockenförmigen Aufnahmekörper entlang der Schnittlinie I - I im Figurenteil D, einer Schnittansicht durch den Aufnahmekörper genommen entlang der Linie II - II im Figurenteil E, und

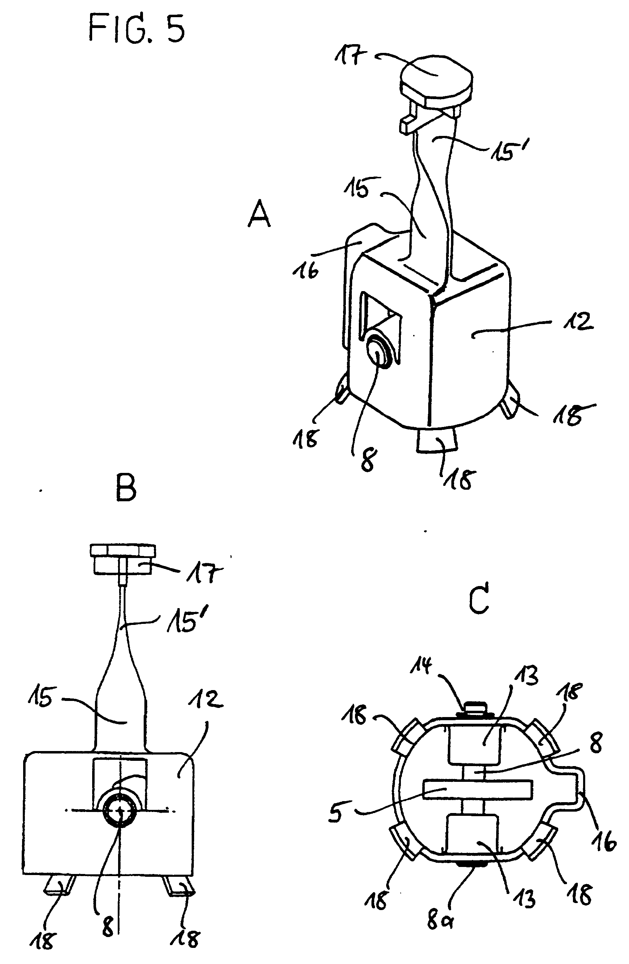

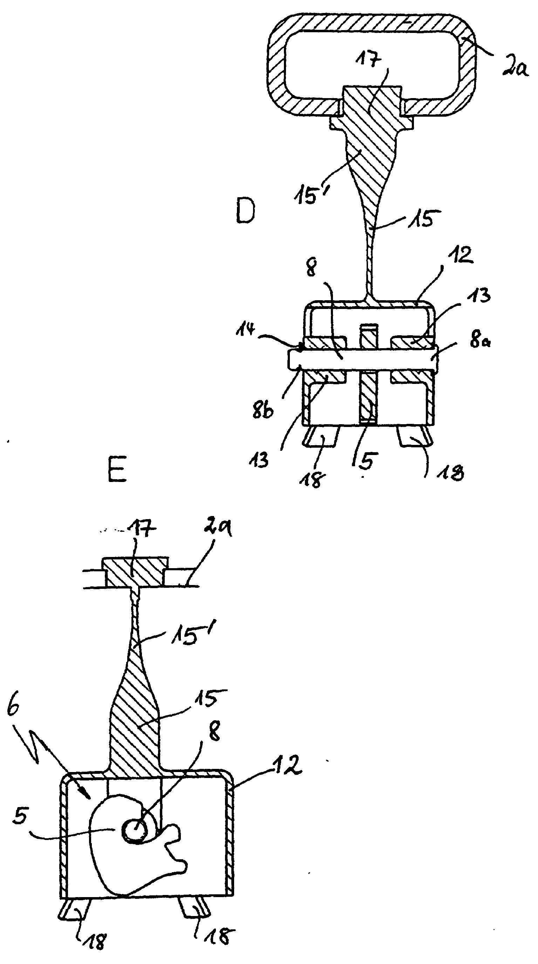

- Fig. 5: ebenfalls in fünf Figurenteilen A bis E eine fünfte Ausführungsform der Erfindung mit einem glockenförmigen Aufnahmekörper für den Haltebolzen und zwei dünnen, um 90° versetzten flexiblen Stegabschnitten mit einer perspektivischen Ansicht im Figurenteil A, einer Seitenansicht im Figurenteil B, einer Draufsicht auf die Unterseite des Aufnahmekörpers im Figurenteil C, einem Längsschnitt durch den Aufnahmekörper quer zur Achse des Haltebolzens im Figurenteil E, und einem Längsschnitt parallel zur Achse des Haltebolzens im Figurenteil E, unter Darstellung der Wirkverbindung des Haltebolzens der Haltegabel mit einem Doppelhebel-Auslösesystem.

Die Fig. 1 zeigt in schematischen Darstellungen mit drei Ansichten, den Figurenteilen A, B und C, eine erste Ausführungsform der erfindungsgemäßen Haltevorrichtung für den Überrollkörper eines Überrollschutzsystems für Kraftfahrzeuge.

Derartige Überrollschutzsysteme, wie sie insbesondere bei Cabriolets oder Sportwagen eingesetzt werden, weisen typischerweise einen geführten Überrollkörper, hier in Form eines Überrollbügels 1, auf, der im vorliegenden Beispiel aus drei Rohren 2 a, 2 b und 2 c zusammengesetzt ist. Dabei bildet den Basisschenkel des Überrollbügels 1 im wesentlichen ein gekrümmtes Rohr 2 a, welches an seinen Enden mit zwei Schenkelrohren 2 b, 2 c durch Schweißen oder andere geeignete Verbindungsarten starr verbunden ist. Die Schenkelrohre 2 a, 2 b sind dabei in fahrzeugfesten (nicht dargestellten) Standrohren geführt.

Im Normalzustand wird der Überrollbügel gegen die Vorspannkraft einer Antriebs-Druckfeder 3 durch eine Haltevorrichtung in einer unteren Ruhelage gehalten und ist im Überschlagfall sensorgesteuert unter Lösen der Haltevorrichtung in eine obere, schützende und verriegelte Stellung bringbar. In Fig. 1, Teil A, ist dabei die ausgelöste obere Stellung dargestellt.

Die Haltevorrichtung besitzt zu diesem Zweck typischerweise ein am Überrollbügel befestigtes Halteglied 4, das in lösbarer mechanischer Wirkverbindung mit einem Auslöseglied 5 an einem sensorgesteuerten Auslösesystem 6 steht, das typischerweise durch einen Auslösemagneten 7, den sogenannten Crashmagneten, gebildet ist. In Fig. 1 C ist dabei ein Auslösesystem mit einem Auslösemagneten in Verbindung mit einem Doppelhebelsystem als Auslöseglied 5 dargestellt, das durch die DE 197 50 693 A 1 bekannt geworden ist.

Das Halteglied 4 ist im Beispiel nach Fig. 1 als Haltegabel 4' ausgebildet und trägt in den Gabelschenkeln 4' a einen Haltebolzen 8, der dort mit üblichen konstruktiven Methoden gehaltert ist. Die Haltegabel 4' ist dabei über einen Gabelhalter-Fortsatz 9 und eine Schelle 10 mit dem Basisschenkel 2 a des Überrollbügels 1 starr verbunden, wobei die Verbindung zwischen Gabelhalter 9 und der Schelle 10 mittels einer Schraubverbindung 11 erfolgt.

Ein Überrollschutzsystem der in Fig. 1 dargestellten Art wird beispielsweise in der eingangs zitierten DE 43 42 400 A1 beschrieben, die auch die weiteren Komponenten eines Überrollschutzsystems zeigt. Da es im Fall der Erfindung allein auf die Ausbildung der Haltevorrichtung ankommt, ist in Fig. 1 und in den weiteren Figuren nur diese Haltevorrichtung explicit dargestellt. Hinsichtlich der anderen Komponenten wird auf den einschlägigen Stand der Technik verwiesen. Dabei ist das in Fig. 1 dargestellte Überrollschutzsystem nur ein Beispiel von möglichen Ausführungsformen, bei denen die erfindungsgemäße Haltevorrichtung zum Einsatz kommen kann.

Nach einer Auslösung soll beim Zurückbringen des Überrollkörpers 1 in die Ruhelage das Halteglied 4 wieder selbsttätig in die Haltestellung bringbar sein, sei es manuell, oder mittels eines Komforcantriebes. Dabei muß die Haltegabel 4' mit ihren Haltebolzen 8 in das Auslöseglied 5 des Doppelhebelsystems einrasten. Durch Fertigungsfehler, Bauteil- und Montagetoleranzen, insbesondere Fluchtungsfehler, kann dabei ein Verspannen der Haltegabel 4' entstehen, die eine spätere Auslösung verhindern könnte. Um dies auf einfache und dennoch wirksame Weise zu verhindern, ist erfindungsgemäß die Haltegabel 4' elastisch nachgebend ausgebildet, was typischerweise durch den Aufbau der Haltegabel aus einem federnden Material, z.B. Federstahl oder einem anderen metallischen Metallwerkstoff, wie Federbronze oder Messing oder einem elastisch nachgebenden Kunststoff, erfolgen kann. Auch ein hybrider Aufbau der Haltegabel ist möglich. Durch die elastische Verformbarkeit der Haltegabel, was in Fig. 1 A durch die Pfeile angedeutet ist, könnten vorgenannte Versatztoleranzen ausgeglichen werden, ohne daß eine wesentliche Verspannung auftritt, so daß ein Verklemmen der Haltegabel 4' bei einer Auslösung nicht auftreten kann. Führungsschrägen am Ende der Gabelschenkel erleichtern dabei das Einführen des Haltebolzens 8 in das Doppelhebelsystem.

In Fig. 1 ist das Halteglied 4 als massive Haltegabel 4' ausgebildet, beispielsweise in Form eines Kunststoffspritzguß-Teiles, wobei der Haltebolzen 8 in massiven Gabelschenkeln 4' a in Bohrungen in diesen Schenkeln gelagert ist.

Die Figuren 2 und 3 zeigen eine Ausführungsform der Haltegabel 4, die aus Blechteilen aufgebaut ist und als Einlegeteil in ein KunststoffspritzguBteil dient, wobei im übrigen diese Ausführungsformen mit derjenigen nach Fig. 1 übereinstimmen.

Die Fig. 2 zeigt dabei in drei Figurenteilen A, B und C eine einstückig und einschalig aus einem Blech aus Federstahl oder dergleichen hergestellte Haltegabel 4", die wechselseitige halbkreisförmige Ausprägungen 4" b zur Aufnahme des Haltebolzens 8 zur Verrastung im Auslösesystem 6 besitzt.

Die Fig. 3 zeigt alternativ dazu in drei Figurenteilen A, B und C eine einstückig und zweischalig aus einem Blechteil aus Federstahl oder dergleichen hergestellte Haltegabel 4"', die in beiden Schenkeln jeweils zwei gegenüberliegende halbkreisförmige Ausprägungen 4''' b zur Aufnahme des Haltebolzens 8 besitzt.

Die bei beiden Varianten unterhalb des Haltebolzens 8 mitlaufenden Blechstreifen der Haltegabelschenkel 4" a bzw. 4''' a dienen der Zentrierung zwischen Haltegabel 4", 4''' und Auslösesystem 6. Bei der Ausführung nach Fig. 3 können sie dabei aus Gründen einer besseren Zentrierung, wie dargestellt, hakenförmig umgebogen sein.

Die Haltegabeln 4", 4''' nach den Figuren 2 und 3 bestehen vorzugsweise aus Federstahlblech, oder einem anderen metallischen Blech mit federnden Eigenschaften, wie Bronze oder Messing. Sie können jedoch auch durch Kunststoffteile gebildet werden, und können dabei, wenn der Gabelhalter 9 aus Kunststoff besteht, einstückig im Wege des Spritzgießens an diesem angespritzt sein.

Bestehen der Gabelhalter 9 und die Haltegabeln 4" bzw 4''' aus einem metallischen Werkstoff, so werden sie mit bekannten Methoden miteinander verbunden, z.B. mittels einer Konstruktion analog nach Fig. 1.

Die Figuren 4 und 5 zeigen zwei Ausführungsformen des erfindungsgemäßen Haltegliedes, die einen allseits glockenförmig ummantelten, unten offenen und im Querschnitt (Fig. 4 D, 5 D) gabelförmigen Aufnahmekörper 12 für den Haltebolzen 8, der in Wirkeingriff mit dem sensorgesteuerten Auslösesystem 6 nach den Figuren 1 - 3 bringbar ist, aufweisen.

Die Glockenform des Aufnahmekörpers 12 gewährleistet, daß kein Schmutz an der Schnittstelle zwischen Haltebolzen 8 und Auslöseglied 5 in das System eindringen kann, das eine gewollte Auslösung verhindern könnte. Ferner ermöglicht der glockenförmige Aufnahmekörper 12 eine konstruktiv günstige Lagerung des Haltebolzens 8.

Der glockenförmige Aufnahmekörper 12 besitzt bei beiden Ausführungsformen innen an zwei gegenüberliegenden Seiten jeweils einen angeformten Lagerzapfen 13 zur Aufnahme des Haltebolzens 8. Dieser liegt im montierten Zustand mit seinem Kopf 8 a an der Außenfläche des Aufnahmekörpers 12 an, wogegen sein anderes Ende eine rillenförmige Nut 8 b besitzt, die einen üblichen Sicherungsring 14 aufnimmt.

Vorzugsweise besteht der glockenförmige Aufnahmekörper 12 mit seinen Lagerzapfen 13 jeweils aus Kunststoff und ist dabei vorzugsweise ein Spritzgießteil. Auf diese Weise läßt sich das Halteglied 4 sehr wirtschaftlich herstellen. Die angespritzten Lagerzapfen 13 sind vorzugsweise, wie in Fig. 4 E zu erkennen ist, unten abgerundet, um das Einschieben des Haltegliedes in das Auslösesystem 16 zu erleichtern, einen Anschlag gegen ein zu weites Einschieben in das Auslösesystem zu bilden, und im verrasteten Zustand den Haltebolzen 8 relativ waagrecht zu halten. Sie können zusätzlich eine sich nach unten erstreckende Einführschräge besitzen (nicht dargestellt).

Bei beiden Ausführungsformen nach den Figuren 4 und 5 besitzt der glockenförmige Aufnahmekörper 12 mindestens einen Abschnitt mit einem dünnen Steg 15, der eine elastische Verbiegung des Aufnahmekörpers ermöglicht, um den Haltebolzen 8 sicher in den verriegelnden Hebel 5 des Auslösesystems 6 (Fig. 1) einzuführen. Die Stege 15 sind vorzugsweise an der Glocke des Aufnahmekörpers 12 zu dessen Befestigungsende hin angeformt.

Bei dem Ausführungsbeispiel nach Fig. 4 weist der Aufnahmekörper 12 am Ende des dünnen Steges 15 zwei Befestigungslaschen 15 a mit Bohrungen 15 b auf, mittels derer er an der Schelle 10 befestigbar ist, die ihrerseits, am Querbügel 2 a des Überrollbügels befestigbar ist, analog der Ausführung nach Fig. 1. Der Aufnahmekörper 12 besitzt dabei an einer Seite seines Mantels eine Ausformung 16 für den notwendigen Schwenkbereich des Haltehebels des Auslösesystems 5. Dabei besitzen die Befestigungslaschen 15 a des Aufnahmekörpers 12 eingelassene Vertiefungen zur formschlüssigen Aufnahme der Schenkel der Schelle 10, um eine Fehlmontage oder ein unbeabsichtigtes Verdrehen (Pendeln) zu verhindern.

Bei dem Ausführungsbeispiel nach Fig. 5 weist der glockenförmige Aufnahmekörper 12 im Anschluß an den Basissteg 15 einen dünnen, um 90° verdrehten Steg 15' auf, mit einem kopfseitigen Verbindungsteil 17, das formschlüssig verriegelnd in dem Bügelteil 2 a aufnehmbar ist.

Am glockenförmigen Mantel des Aufnahmekörpers 12 angeformte Führungsnasen 18 unterstützen das Einfahren des Haltebolzens 8 in das Auslösesystem 6. Diese Führungsnasen können auch bei der Ausführung nach Fig. 4 vorgesehen sein.

Während die Figuren 1 - 3 den ausgelösten Zustand des Überrollbügels zeigen, zeigt die Fig. 5 E den Wirkeingriff des Haltebolzens 8 mit dem Auslösesystem 6.

Das Auslösesystem besteht vorzugsweise aus einem Crashmagneten 7 und einem davon betätigbaren Doppelhebelsystem 5 als Auslöseglied für den Wirkeingriff mit dem Haltebolzen 8. Bei Betätigung des Crashmagneten 7 wird der den Haltebolzen 8 verriegelnde Hebel 5 (aufgrund eines Verschwenkens eines vorgeschalteten Hebels) entgegen dem Uhrzeigersinn verschwenkt und gibt den Haltebolzen 8 und damit den Überrollbügel 1 frei, der aufgrund der Antriebsfeder 3 in seine obere Stützlage schnellt.

Beim Wiedereinfahren des Haltebolzens 8 in die Haltestellung werden durch die erfindungsgemäßen Maßnahmen Bauteil- und Montagetoleranzen ausgeglichen, ohne daß ein Verspannen des Auslösesystems auftritt, das eine nachfolgende Auslösung beeinträchtigen könnte.

## Patentansprüche

1. Haltevorrichtung für den Überrollkörper (1) eines Überrollschutzsystems für Kraftfahrzeuge, die ein am Überrollkörper befestigtes Halteglied (4) mit einem Haltebolzen (8) aufweist, der in lösbarer mechanischer Wirkverbindung mit einem Auslöseglied (5) eines sensorgesteuerten Auslösesystems (6) steht, **dadurch gekennzeichnet, daß** das Halteglied (4) zwischen dem Haltebolzen (8) und seiner Befestigung am Überrollkörper (1) zumindest in einem vorgegebenen Abschnitt durch Formgebung und/oder mittels eines elastischen Materials zum Ausgleich von Fertigungstoleranzen und Fluchtungsfehlern elastisch nachgebend ausgebildet ist.

2. Haltevorrichtung nach Anspruch 1, **dadurch gekennzeichnet, daß** das Halteglied (4) als Haltegabel (4', 4", 4''') ausgebildet ist, die aus einem elastisch nachgebenden Material aufgebaut und starr mit dem Überrollkörper (1) verbunden ist, und in deren Gabelschenkeln (4 a) der Haltebolzen (8) gehaltert ist.

3. Haltevorrichtung nach Anspruch 2, **dadurch gekennzeichnet, daß** das Material Federstahl ist.

4. Haltevorrichtung nach Anspruch 2, **dadurch gekennzeichnet, daß** das Material ein elastisch nachgebender Kunststoff ist.

5. Haltevorrichtung nach einem der Ansprüche 2 bis 4, **dadurch gekennzeichnet, daß** die Haltegabel (4') ein Strangpreßteil oder ein Spritzgußteil ist, mit Bohrungen in den Gabelschenkeln (4 a) zur Lagerung des Haltebolzens (8).

6. Haltevorrichtung nach einem der Ansprüche 2 bis 4, **dadurch gekennzeichnet, daß** die Haltegabel (4") aus einem einschaligen Blechteil geformt ist, das in den Gabelschenkeln (4 a) wechselseitig jeweils eine halbkreisförmige Ausprägung (4 b) als Lagerstelle für den Haltebolzen aufweist.

7. Haltevorrichtung nach einem der Ansprüche 2 bis 4, **dadurch gekennzeichnet, daß** die Haltegabel (4''') zweischalig aus einem Blechteil geformt ist, und in beiden Gabelschenkeln (4 a) jeweils zwei gegenüberliegende halbkreisförmige Ausprägungen (4 b) als Lagerstellen für den Haltebolzen (8) ausgeformt sind.

8. Haltevorrichtung nach Anspruch 1, **dadurch gekennzeichnet, daß** das Halteglied (4) einen glockenförmigen Aufnahmekörper (12) aufweist, der an zwei gegenüberliegenen Bereichen Bohrungen mit daran innen angeformten hohlen Lagerzapfen (13) für den Haltebolzen (8) besitzt, und der kopfseitig einen Fortsatz zur starren Befestigung am Überrollkörper (1) mit mindestens einem dünnen Steg (15), der eine elastische Verbiegung des Aufnahmekörpers (12) ermöglicht, aufweist.

9. Haltevorrichtung nach Anspruch 8, **dadurch gekennzeichnet, daß** der Fortsatz zwei um 90° zueinander verdrehte dünne Stegbereiche (15, 15') aufweist.

10. Haltevorrichtung nach Anspruch 8 oder 9, **dadurch gekennzeichnet, daß** an der Oberseite des Fortsatzes zwei Befestigungslaschen (15 a) zur Befestigung mit einer Schelle (10) angeformt sind, und die Schelle (10) mit dem Überrollkörper (1) verbindbar ist.

11. Haltevorrichtung nach Anspruch 8 oder 9, **dadurch gekennzeichnet, daß** an der Oberseite des Fortsatzes ein Verbindungselement (17) für eine formschlüssige Verbindung mit dem Überrollkörper (1) angeformt ist.

12. Haltevorrichtung nach einem der Ansprüche 8 bis 11, **dadurch gekennzeichnet, daß** am offenen Rand des glockenförmigen Aufnahmekörpers (12) Führungsnasen (18) angeformt sind.

13. Haltevorrichtung nach einem der Ansprüche 8 bis 12, **dadurch gekennzeichnet, daß** der glockenförmige Aufnahmekörper (12) mit seinen Lagerzapfen (13) aus Kunststoff besteht.

14. Haltevorrichtung nach Anspruch 13, **dadurch gekennzeichnet, daß** der glockenförmige Aufnahmekörper (12) ein Spritzgießteil ist.

15. Haltevorrichtung nach einem der Ansprüche 1 bis 14, **dadurch gekennzeichnet, daß** das Auslösesystem (6) einen Auslösemagneten (7) in Verbindung mit einem Doppelhebelsystem als im Wirkeingriff mit dem Haltebolzen (8) stehendes Auslöseglied (5) aufweist.

## Claims

1. Holding device for the roll bar element (1) of a roll bar protection system for motor vehicles, which has a holding element (4) which is attached to the roll bar element and has a holding bolt (8) which has a releasable mechanical operative connection to a triggering element (5) of a sensor-controlled triggering system (6), **characterized in that** the holding element (4) is made elastically resilient between the holding bolt (8) and its attachment to the roll bar element (1), at least in a predefined section, by shaping and/or by means of an elastic material in order to compensate fabrication tolerances and alignment faults.

2. Holding device according to Claim 1, **characterized in that** the holding element (4) is embodied as a holding fork (4', 4'', 4''') which is constructed from an elastically resilient material and is rigidly connected to the roll bar element (1), and the holding bolt (8) is secured in the fork limbs (4a) of said holding fork (4', 4", 4''').

3. Holding device according to Claim 2, **characterized in that** the material is spring steel.

4. Holding device according to Claim 2, **characterized in that** the material is an elastically resilient plastic.

5. Holding device according to one of Claims 2 to 4, **characterized in that** the holding fork (4') is an extruded part or an injection moulded part, with bores in the fork limbs (4a) for mounting the holding bolt (8).

6. Holding device according to one of Claims 2 to 4, **characterized in that** the holding fork (4") is formed from a single-shell sheet-metal part which has a semicircular depression (4b) on alternating sides in each of the fork limbs (4a) as a bearing point for the holding bolt.

7. Holding device according to one of Claims 2 to 4, **characterized in that** the holding fork (4''') is formed with two shells made from a sheet-metal part, and in each case two semicircular depressions (4b) lying opposite one another are formed in the two fork limbs (4a) as bearing points for the holding bolt (8).

8. Holding device according to Claim 1, **characterized in that** the holding element (4) has a bell-shaped receiving body (12) which has, in two regions lying opposite one another, bores with hollow bearing pins (13) formed on the inside thereof, for the holding bolt (8), and which has at the head end a projection for rigid attachment to the roll bar element (1) with at least one thin web (15) which permits the receiving body (12) to bend elastically.

9. Holding device according to Claim 8, **characterized in that** the projection has two thin web regions (15, 15') which are turned through 90° with respect to one another.

10. Holding device according to Claim 8 or 9, **characterized in that** two attachment clips (15a) for attachment to a clamp (10) are formed onto the upper side of the projection, and the clamp (10) can be connected to the roll bar element (1).

11. Holding device according to Claim 8 or 9, **characterized in that** a connecting element (17) for a positively locking connection to the roll bar element (1) is formed onto the upper side of the projection.

12. Holding device according to one of Claims 8 to 11, **characterized in that** guide lugs (18) are formed onto the open edge of the bell-shaped receiving body (12).

13. Holding device according to one of Claims 8 to 12, **characterized in that** the bell-shaped receiving body (12) with its bearing pins (13) is composed of plastic.

14. Holding device according to Claim 13, **characterized in that** the bell-shaped receiving body (12) is an injection moulded part.

15. Holding device according to one of Claims 1 to 14, **characterized in that** the triggering system (6) has a triggering magnet (7) in conjunction with a double lever system as a triggering element (5) which is in operative engagement with the holding bolt (8).

## Revendications

1. Dispositif de retenue pour le corps (1) de protection au retournement d'un système de protection au retournement pour des véhicules automobiles, qui présente un élément de retenue (4) fixé sur ledit corps et doté d'un boulon de retenue (8) qui se trouve en liaison fonctionnelle amovible avec un élément de libération (5) d'un système de libération (6) commandé par capteur, **caractérisé en ce que** l'élément de retenue (4) est, entre le boulon de retenue (8) et sa fixation sur le corps (1) de protection au retournement, au moins dans une partie prédéfinie, par façonnage et/ou au moyen d'un matériau élastique, réalisé élastiquement flexible afin de compenser les tolérances de fabrication et les erreurs d'alignement.

2. Dispositif de retenue selon la revendication 1, **caractérisé en ce que** l'élément de retenue (4) est réalisé sous forme de fourche de retenue (4', 4'', 4'''), qui est constituée d'un matériau élastiquement flexible et qui est reliée rigidement au corps (1) de protection au retournement, et dans les branches de fourche (4a) de laquelle est maintenu le boulon de retenue (8).

3. Dispositif de retenue selon la revendication 2, **caractérisé en ce que** le matériau est de l'acier à ressorts.

4. Dispositif de retenue selon la revendication 2, **caractérisé en ce que** le matériau est une matière plastique élastiquement flexible.

5. Dispositif de retenue selon l'une quelconque des revendications 2 à 4, **caractérisé en ce que** la fourche de retenue (4') est une pièce filée à la presse ou une pièce moulée par injection, avec des perçages dans les branches de fourche (4a) pour le montage du boulon de retenue (8).

6. Dispositif de retenue selon l'une quelconque des revendications 2 à 4, **caractérisé en ce que** la fourche de retenue (4'') est formée à partir d'une pièce de tôle à une seule paroi, qui présente sur des côtés opposés dans les branches de fourche (4a) un relief semi-circulaire respectif (4b) comme palier pour le boulon de retenue.

7. Dispositif de retenue selon l'une quelconque des revendications 2 à 4, **caractérisé en ce que** la fourche de retenue (4''') est formée à double paroi à partir d'une pièce de tôle, et deux reliefs semi-circulaires opposés (4b) sont respectivement formés dans les deux branches de fourche (4a) comme paliers pour le boulon de retenue (8).

8. Dispositif de retenue selon la revendication 1, **caractérisé en ce que** l'élément de retenue (4) présente un corps récepteur (12) en forme de cloche, qui possède sur deux régions opposées des perçages à l'intérieur desquels sont formés des tourillons creux (13) pour le boulon de retenue (8), et qui présente du côté de tête un prolongement pour la fixation rigide sur le corps (1) de protection au retournement, avec au moins une mince partie de liaison (15) qui permet une déformation élastique du corps récepteur (12).

9. Dispositif de retenue selon la revendication 8, **caractérisé en ce que** le prolongement présente deux minces parties de liaison (15, 15') tordues à 90° l'une par rapport à l'autre.

10. Dispositif de retenue selon la revendication 8 ou 9, **caractérisé en ce que** deux pattes de fixation (15a) sont formées sur le dessus du prolongement pour la fixation à un collier (10), et le collier (10) peut être assemblé au corps (1) de protection au retournement.

11. Dispositif de retenue selon la revendication 8 ou 9, **caractérisé en ce qu'**un élément d'assemblage (17) est formé sur le dessus du prolongement pour un assemblage en engagement positif avec le corps (1) de protection au retournement.

12. Dispositif de retenue selon l'une quelconque des revendications 8 à 11, **caractérisé en ce que** des ergots de guidage (18) sont formés sur le bord ouvert du corps récepteur (12) en forme de cloche.

13. Dispositif de retenue selon l'une quelconque des revendications 8 à 12, **caractérisé en ce que** le corps récepteur (12) en forme de cloche, avec ses tourillons (13), est réalisé en matière plastique.

14. Dispositif de retenue selon la revendication 13, **caractérisé en ce que** le corps récepteur (12) en forme de cloche est une pièce moulée par injection.

15. Dispositif de retenue selon l'une quelconque des revendications 1 à 14, **caractérisé en ce que** le système de libération (6) présente un aimant de libération (7) conjointement avec un système à double levier comme élément de libération (5) se trouvant en engagement actif avec le boulon de retenue (8).
